(19) Europäisches Patentamt
European Patent Office
Office européen des brevets

(11) **EP 4 250 264 A2**

(12) **EUROPEAN PATENT APPLICATION**

(43) Date of publication:
**27.09.2023 Bulletin 2023/39**

(21) Application number: **23190347.7**

(22) Date of filing: **08.08.2023**

(51) International Patent Classification (IPC):
**G08B 21/24** (2006.01)   **H04W 4/021** (2018.01)

(52) Cooperative Patent Classification (CPC):
**G08G 1/207; H04W 4/021;** G08B 21/0261

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211216334**

(71) Applicant: **FJ Dynamics Co., Ltd.
Shenzhen, Guangdong 518000 (CN)**

(72) Inventors:
• **ZOU, Jianguo
Shenzhen, Guangdong 518000 (CN)**
• **WANG, Xingyang
Shenzhen, Guangdong 518000 (CN)**
• **Wu, Di
Shenzhen, Guangdong 518000 (CN)**
• **ZHOU, Jie
Shenzhen, Guangdong 518000 (CN)**

(74) Representative: **Zaboliene, Reda
Metida
Business center Vertas
Gyneju str. 16
01109 Vilnius (LT)**

(54) **MONITORING METHOD, MONITORING DEVICE, AND ELECTRONIC DEVICE**

(57)   Disclosed in the present invention are a monitoring method, a monitoring device and an electronic device. The method comprises: calling or obtaining material information; wherein the material information includes at least one of area shape information, point coordinate data, length data, and boundary information corresponding to the monitoring area; obtaining real-time coordinate data of the electronic device; determining whether the electronic device moved out of the monitoring area according to the material information and the real-time coordinate data; generating record information in response to the electronic device moving out of the monitoring area or receiving a reminder information output by the electronic device; wherein the electronic device outputs the reminder information when the electronic device is moved out of the monitoring area. The present disclosure can determine whether the electronic device has moved out of the monitoring area according to two elements of the reminder information and the obtained real-time coordinate data, thereby improving the accuracy of the monitoring device for monitoring the location of the electronic device.

FIG. 3

## Description

TECHNICAL FIELD

The present disclosure relates to the field of unmanned driving, in particular to a monitoring method, a monitoring device, and an electronic device.

BACKGROUND

In the field of drones, staff can monitor one or more unmanned devices through a remote monitoring device, and the remote monitoring device can be a server. In some scenarios, the staff can divide a monitoring area in some geographic locations and dispatch the unmanned device to perform operations or overhaul within the monitoring area. For example, the unmanned device may be an unmanned agricultural machine, and the monitoring area may be a field to be operated agriculturally, and the staff may dispatch the unmanned agricultural machine to work in the monitoring area. The monitoring device may obtain the geographic location of the unmanned device and compare the obtained geographic location with a location and a range of the monitoring area to determine whether the unmanned device moves out of the monitoring area. The staff can determine whether there are errors in the operation of the unmanned device by counting information such as the number of times the unmanned device is moved out of the monitoring area, and the staff can easily determine whether to dispatch the unmanned device and what kind of operation to dispatch the unmanned device.

The monitoring device is unable to obtain the geographic location of the unmanned device when the communication network is poor, and it is impossible to determine whether the unmanned device has moved out of the monitoring area when the communication network is poor, which affects the accuracy of the surveillance of the unmanned device.

SUMMARY

The embodiment of the present disclosure provides a monitoring method, a monitoring device, and an electronic device, which can determine whether a monitored terminal has moved out of a monitoring area at both a monitoring terminal and the monitored terminal. The monitoring terminal can determine whether the monitored terminal has moved out of the monitoring area based on the reminder information transmitted by the monitored terminal when the communication network is not good, which improves the accuracy of the location monitoring and the convenience of the staff.

In a first aspect, the embodiment of the present disclosure provides a monitoring method, which is applied to a monitoring device, the monitoring method may monitor whether an electronic device is moved out of a monitoring area, and the monitoring method may include the following steps:

calling or obtaining material information; wherein the material information includes at least one of area shape information, point coordinate data, length data, and boundary information corresponding to the monitoring area; obtaining real-time coordinate data of the electronic device; determining whether the electronic device moved out of the monitoring area according to the material information and the real-time coordinate data; generating record information in response to the electronic device moving out of the monitoring area or receiving a reminder information output by the electronic device; wherein the electronic device outputs the reminder information when the electronic device is moved out of the monitoring area.

Optionally, wherein determining whether the electronic device moved out of the monitoring area, includes: determining whether a first coordinate value of the real-time coordinate data is less than a first coordinate value of first coordinate data or greater than a first coordinate value of second coordinate data in response to the monitoring area being a rectangular area; wherein the point coordinate data comprises the first coordinate value and a second coordinate value of the first coordinate data and the first coordinate value and a second coordinate value of the second coordinate data, and the first coordinate value of the first coordinate data is less than the first coordinate value of the second coordinate data; determining whether a second coordinate value of the real-time coordinate data is greater than the second coordinate value of the first coordinate data or less than the second coordinate value of the second coordinate data in response to the first coordinate value of the real-time coordinate data being greater than the first coordinate value of the first coordinate data or being less than the first coordinate value of the second coordinate data; wherein the second coordinate value of the first coordinate data is greater than the second coordinate value of the second coordinate data; and determining that the electronic device is moved out of the monitoring area in response to the first coordinate value of the real-time coordinate data being less than the first coordinate value of the first coordinate data or being greater than the first coordinate value of the second coordinate data, or in response to the second coordinate value of the real-time coordinate data being greater than the second coordinate value of the first coordinate data or being less than the second coordinate value of the second coordinate data.

Optionally, wherein the real-time coordinate data corresponds to a real-time coordinate point, wherein determining whether the electronic device moved out of the monitoring area, includes: calculating a spacing distance between the real-time coordinate point and a center point of the point coordinate data in response to the monitoring area being a circular area; determining whether the spacing distance is greater than the length data; wherein the length data is a radius of the monitoring area; and determining that the electronic device is moved out of the monitoring area in response to the spacing distance being greater than the length data.

Optionally, wherein the real-time coordinate data corresponds to a real-time coordinate point, wherein determining whether the electronic device moved out of the monitoring area, includes: determining whether the real-time coordinate point is located on a boundary of the monitoring area according to the boundary information and the real-time coordinate data in response to the monitoring area being a polygonal area; taking the real-time coordinate point as a starting point and generating reference ray extending in a reference direction in response to the real-time coordinate point not being located on the boundary of the monitoring area; calculating a number of intersection points of the reference ray with the boundary of the monitored area; determining that the electronic device is moved out of the monitoring area in response to the number of the intersection points being an even number; and determining that the electronic device is within the monitoring area in response to the real-time coordinate point being located on the boundary of the monitoring area, or in response to the number of the intersection points being an odd number.

Optionally, wherein determining whether the electronic device moved out of the monitoring area, includes: obtaining the real-time coordinate data in response to the number of the intersection points being greater than a number of the boundaries of the monitoring area.

In a second aspect, the embodiment of the present disclosure provides a monitoring method, which is applied to an electronic device, the monitoring method may monitor whether an electronic device is moved out of a monitoring area, and the monitoring method may include the following steps:

calling or obtaining material information; wherein the material information includes at least one of area shape information, point coordinate data, length data, and boundary information corresponding to the monitoring area; determining whether the electronic device moved out of the monitoring area according to the material information and a real-time coordinate data of the electronic device; outputting reminder information to a monitoring device in response to the electronic device is moving out of the monitoring area.

Optionally, wherein outputting reminder information to a monitoring device, includes: determining whether the electronic device is communicatively connected to the monitoring device; outputting the reminder information to the monitoring device in response to electronic device being communicatively connected to the monitoring device; and storing the reminder information and determining whether the electronic device is communicatively connected to the monitoring device in response to electronic device not being communicatively connected to the monitoring device.

Optionally, wherein determining whether the electronic device moved out of the monitoring area, includes: determining whether a first coordinate value of the real-time coordinate data is less than a first coordinate value of first coordinate data or greater than a first coordinate value of second coordinate data in response to the monitoring area being a rectangular area; wherein the point coordinate data comprises the first coordinate value and a second coordinate value of the first coordinate data and the first coordinate value and a second coordinate value of the second coordinate data, and the first coordinate value of the first coordinate data is less than the first coordinate value of the second coordinate data; determining whether a second coordinate value of the real-time coordinate data is greater than the second coordinate value of the first coordinate data or less than the second coordinate value of the second coordinate data in response to the first coordinate value of the real-time coordinate data being greater than the first coordinate value of the first coordinate data or being less than the first coordinate value of the second coordinate data; wherein the second coordinate value of the first coordinate data is greater than the second coordinate value of the second coordinate data; and determining that the electronic device is moved out of the monitoring area in response to the first coordinate value of the real-time coordinate data being less than the first coordinate value of the first coordinate data or being greater than the first coordinate value of the second coordinate data, or in response to the second coordinate value of the real-time coordinate data being greater than the second coordinate value of the first coordinate data or being less than the second coordinate value of the second coordinate data.

Optionally, wherein the real-time coordinate data corresponds to a real-time coordinate point, wherein determining whether the electronic device moved out of the monitoring area, includes: calculating a spacing distance between the real-time coordinate point and a center point of the point coordinate data in response to the monitoring area being a circular area; determining whether the spacing distance is greater than the length data; wherein the length data is a radius of the monitoring area; and determining that the electronic device is moved out of the monitoring area in response to the spacing distance being greater than the length data.

Optionally, wherein the real-time coordinate data corresponds to a real-time coordinate point, wherein determining whether the electronic device moved out of the monitoring area, includes: determining whether the real-time coordinate point is located on a boundary of the monitoring area according to the boundary information and the real-time coordinate data in response to the monitoring area being a polygonal area; taking the real-time coordinate point as a starting point and generating reference ray extending in a reference direction in response to the real-time coordinate point not being located on the boundary of the monitoring area; calculating a number of intersection points of the reference ray with the boundary of the monitored area; determining that the electronic device is moved out of the monitoring area in response to the number of the intersection points being an even number; and determining that the electronic device is within the monitoring area in response to the real-time coordinate point being located on the boundary of the monitoring area, or in response to the number of the intersection points being an odd number.

Optionally, wherein determining whether the electronic device moved out of the monitoring area, includes: obtaining the real-time coordinate data in response to the number of the intersection points being greater than a number of the boundaries of the monitoring area.

In a third aspect, the embodiment of the present disclosure provides a monitoring device, the monitoring device includes a first storage device and a first processor, the first storage device stores a first program, and when the first program is executed, the first processor is configured to execute the above monitoring method.

In a fourth aspect, the embodiment of the present disclosure provides an electronic device, the electronic device includes a second storage device and a second processor, the second storage device stores a second program, and when the second program is executed, the second processor is configured to execute the above monitoring method.

The monitoring method, the monitoring device and electronic device can determine whether the electronic device has moved out of the monitoring area according to two elements of the reminder information and the obtained real-time coordinate data, thereby reducing the situation that the monitoring device cannot monitor the electronic device for a period of time due to poor communication network, improving the accuracy of the monitoring device for monitoring the location of the electronic device, and improving the convenience for the staff to dispatch the electronic device.

The present disclosure is further described below in conjunction with the accompanying drawings and specific embodiments.

BRIEF DESCRIPTION OF THE DRAWINGS

In order to more clearly illustrate the technical solution of the embodiment of the present disclosure, the accompanying drawings required in the description of the embodiment will be briefly introduced below, obviously, the drawings in the following description are some embodiments of the present disclosure, for those skilled in the art, other drawings can also be obtained from these drawings without any creative work.

FIG. 1 is a schematic diagram of a monitoring device according to an embodiment of the present disclosure.

FIG. 2 is a schematic diagram of an electronic device according to an embodiment of the present disclosure.

FIG. 3 is a flowchart of a monitoring method according to an embodiment of the present disclosure.

FIG. 4A is a flowchart of the monitoring method according to another embodiment of the present disclosure.

FIG. 4B is a flowchart of the monitoring method according to another embodiment of the present disclosure.

FIG. 5 is a flowchart of the monitoring method according to another embodiment of the present disclosure.

FIG. 6 is a flowchart of the monitoring method according to another embodiment of the present disclosure.

FIG. 7A is a schematic diagram of a monitoring area according to an embodiment of the present disclosure.

FIG. 7B is a schematic diagram of the monitoring area according to another embodiment of the present disclosure.

FIG. 7C is a schematic diagram of the monitoring area according to another embodiment of the present disclosure.

FIG. 8 is a flowchart of the monitoring method according to another embodiment of the present disclosure.

DETAILED DESCRIPTION

The following will provide a clear and complete description of the technical solution in the embodiments of the present disclosure in conjunction with the accompanying drawings, obviously, the described embodiments are part of the embodiments of the present disclosure, not all of them.

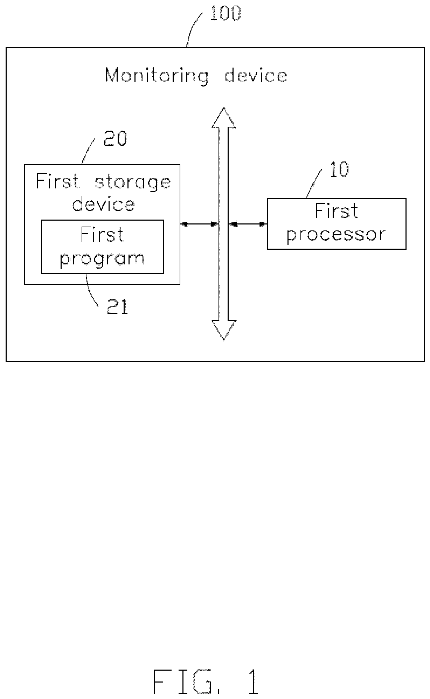

FIG. 1 is a schematic diagram of a monitoring device 100 in accordance with an embodiment of the present disclosure.

The monitoring device 100 may obtain a location of an electronic device 200 and monitor whether the electronic device 200 is removed from a monitoring area according to the location of the electronic device 200.

The present disclosure does not limit the type of the electronic device 200. For example, the electronic device 200 may be a mechanical device with a mobile function, and the electronic device 200 may be, but not limited to, an agricultural machine, a vehicle, and a robot. The electronic device 200 can be a component installed on a mechanical device with a mobile function, and the electronic device 200 can be, but not limited to, an automatic navigation device installed on an agricultural machine, an automatic navigation device installed on a vehicle, an automatic navigation device installed on a robot, etc.

In the embodiment, the monitoring device 100 can communicate with the electronic device 200. The present application does not limit the manner of the communication connection between the monitoring device 100 and the electronic device 200. For example, the monitoring device 100 and the electronic device 200 can establish a wireless communication connection through a wireless network.

The present disclosure does not limit the type of the monitoring device 100. For example, the monitoring device 100 may be a server connected to the electronic device 200 in wireless communication.

In the embodiment, the monitoring device 100 includes a first processor 10 and a first storage device 20. The first processor 10 and the first storage device 20 can be connected through a communication bus. The first storage device 20 stores a first program 21, the first processor 10 can execute the first program 21 stored in the first storage device 20 to execute the monitoring method, thereby monitoring whether the electronic device 200 moves out of the monitoring area.

The monitoring area can be the area that the staff considers to be divided. For example, the monitoring area may be an area enclosed by the boundaries of a field where the agricultural machine is operating, and the electronic device 200 may be an automatic navigation device installed on the agricultural machine. The agricultural machine may be driven in the monitoring area with the assistance of the electronic device 200 to accomplish the agricultural operations. When the monitoring device 100 determines that the electronic device 200 has moved out of the monitoring area, the monitoring device 100 may record the event and the time of the electronic device 200 moving out of the monitoring area, so as to facilitate the staff to determine whether the agricultural machine in automatic driving has completed the agricultural work and its location, it is convenient for the staff to deploy the agricultural machine.

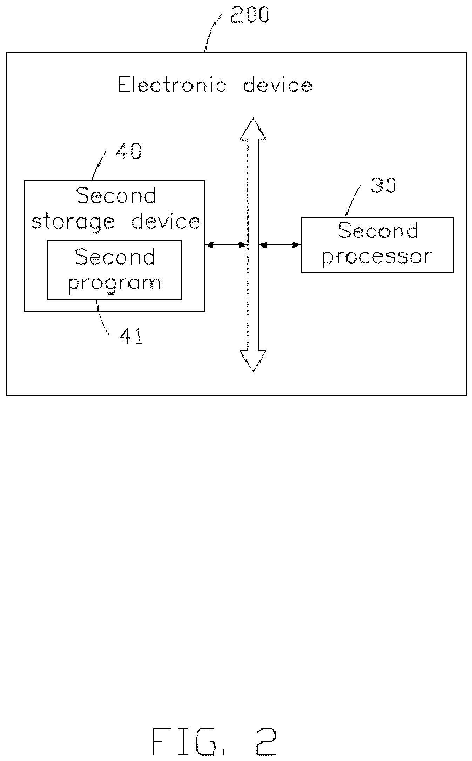

FIG. 2 is a schematic diagram of an electronic device 200 in accordance with an embodiment of the present disclosure.

In the embodiment, the electronic device 200 includes a second processor 30 and a second storage device 40. The second processor 30 and the second storage device 40 can be connected through a communication bus. The second storage device 40 stores a second program 41, the second processor 30 can execute the second program 41 stored in the second storage device 40 to execute the monitoring method and determine the location of the electronic device 200 and cooperate with the monitoring device 100 to monitor the location of the electronic device 200.

The first processor 10 and the second processor 30 may be a general-purpose central processing unit (CPU), a microprocessor, an application-specific integrated circuit (ASIC), or one or more integrated circuits for controlling program execution in the above schemes.

The first storage device 20 and the second storage device 40 may be read-only memory (ROM) or other types of static memory devices storing static information and instructions, random access memory (RAM) or other types of dynamic memory devices storing information and instructions. The first storage device 20 and the second storage device 40 may be electrically erasable programmable read-only memory (ERPOM), a CD-ROM, or optical disk storage (including compressed optical disks, laser disks, optical disks, digital versatile disks, Blu-ray discs, etc.), magnetic disk storage media, or other magnetic storage devices, or any other medium that can be used to carry or store desired program code in the form of instructions or data structures and that can be accessed by a computer, but is not limited thereto.

The first storage device 20 may exist independently and be connected to the first processor 10 through a bus. The storage device 20 may be integrated with the first processor 10. The second storage device 40 may exist independently and be connected to the second processor 30 through a bus. The second storage device 40 may be integrated with the second processor 30.

It can be understood that when the working width of the agricultural machine is less than twice the turning radius of the agricultural machine, the processor may execute a route planning method to plan a driving route of the agricultural machine for agricultural work.

For example, the monitoring device 100 may be a server, the first processor 10 can be a CPU of the server, the first storage device 20 may be a hard disk and a memory stick of the server; the electronic device 200 can be an automatic navigation device installed on a vehicle, and the second processor 30 may be a CPU of the automatic navigation device, and the second storage device 40 may be a hard disk and a memory stick in the automatic navigation device. The first processor 10 can communicate with the second processor 30 through a wireless network, so as to realize the communication connection between the monitoring device 100 and the electronic device 200.

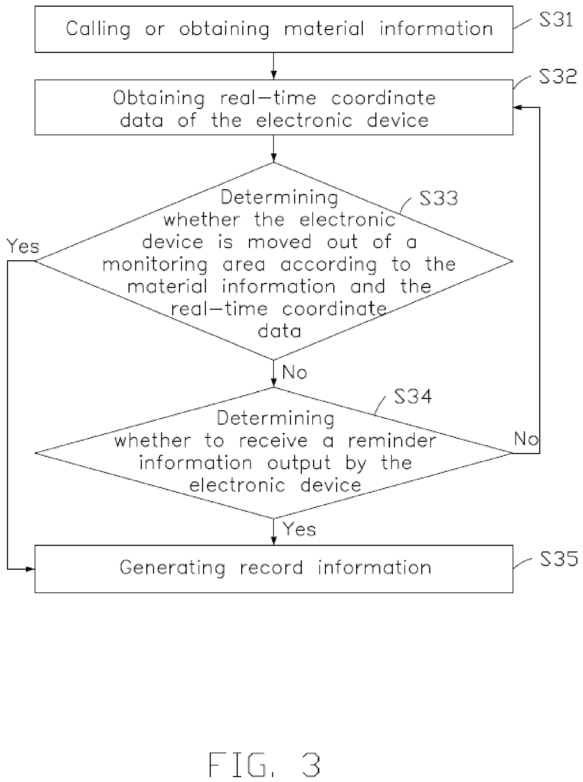

FIG. 3 is a flowchart of a monitoring method in accordance with an embodiment of the present disclosure. A route planning method shown in FIG. 3 may be applied to the first processor 10. In one embodiment, the monitoring method performed by the first processor 10 may include the following steps:

At step S31, calling or obtaining material information.

In the embodiment, the material information may be information preset by the staff before the monitoring method is executed. The material information may include at least one of area shape information, point coordinate data, length data, and boundary information corresponding to the monitoring area.

The area shape information may be information corresponding to the shape presented by the monitoring area, for example, a content of the area shape information may be a circular area, a rectangular area, a polygonal area.

The point coordinate data may be the coordinate data of the key coordinate point corresponding to the monitoring area, for example, the point coordinate data may be a coordinate data of two oppositely arranged apexes of the rectangular area, a coordinate data of a center point of the circular area, and a coordinate data of multiple vertices of the polygonal area.

The length data may be distance data of a key distance corresponding to the monitoring area, for example, the length data may be a radius length value of the circular area, and a length value of the boundary of the polygonal area.

The boundary information may be information corresponding to the boundary of the monitoring area, for example, a content of the boundary information may be a functional formula corresponding to each boundary of the polygonal area, a functional formula corresponding to a boundary of the circular area.

It can be understood that before the implementation of the monitoring method, the staff can establish a coordinate system based on geographic information and divide the monitoring area on the coordinate system. The coordinate point corresponding to the point coordinate data is the coordinate point in the coordinate system established by the staff. The present disclosure does not limit the type of the coordinate system, for example, the established coordinate system may be a latitude-longitude coordinate system, and a first coordinate value and a second coordinate value of the coordinate point in the coordinate system are the longitude data and the latitude data of the coordinate point, respectively. For example, the established coordinate system may be a geodetic coordinate system (GCS).

The coordinate data corresponding to the coordinate point in the coordinate system includes a first coordinate value and a second coordinate value.

It can be understood that the content of the boundary information may be a functional formula corresponding to the boundary of the monitoring area in the coordinate system. When the monitoring area is a polygonal area, the functional formula may be obtained by calculating the coordinate data of at least two points located on the boundary. When the monitoring area is a circular area, the functional formula can be obtained by calculating the coordinate data of the center point of the monitoring area in the coordinate system and the radius length of the monitoring area.

In one embodiment, the monitoring device 100 is a device with a human-computer interaction function, the staff may input the material information into the monitoring device 100 and store the material information in the first storage device 20. When the first processor 10 executes step S31, the first processor 10 may call the material information from the first storage device 20.

In another embodiment, the electronic device 200 is a device with a human-computer interaction function, the staff may input the material information into the electronic device 200 and store the material information in the second storage device 40. When the first processor 10 executes step S31, the first processor 10 may obtain the material information from the electronic device 200.

In another embodiment, before the monitoring method is executed, the staff can operate an external device (not shown in the figure) and input the material information into the external device. The external device is communicatively connected to the monitoring device 100. When the first processor 10 executes step S31, the first processor 10 obtains the material information from the external device.

The external device can be a device with human-computer interaction function, information processing function and wireless communication function, and the external device may be but not limited to a personal computer, a smart phone, a tablet computer, and a smart watch.

At step S32, obtaining real-time coordinate data of the electronic device 200.

The electronic device 200 communicates with a positioning system (not shown in the figure), and the monitoring device 100 communicates with the positioning system. The monitoring device 100 obtains the real-time coordinate data of the electronic device 200 in the coordinate system from the positioning system at different time nodes. The present disclosure does not limit the type of the positioning system, for example, the positioning system may be a global positioning system (GPS), the positioning system may be a beidou navigation satellite system (BDS).

At step S33, determining whether the electronic device 200 is moved out of the monitoring area according to the material information and the real-time coordinate data. If the electronic device 200 is moved out of the monitoring area, step S35 is implemented, otherwise returns to step S34.

When the monitoring method is operating, the electronic device 200 is located within the monitoring area. When the first processor 10 determines that the electronic device 200 has not moved out of the monitoring area, the first processor 10 returns to step S32 to obtain the real-time coordinate data of the electronic device 200, and determines whether the electronic device 200 has moved out of the monitoring area according to the obtained real-time coordinate data, so as to realize continuous monitoring of whether the electronic device 200 has moved out of the monitoring area.

At step S34, determining whether to receive a reminder information output by the electronic device 200. If a reminder has been received, step S35 is implemented, otherwise returns to step S32.

The second processor 30 obtains the real-time coordinate data through the positioning system and determines whether the electronic device 200 has moved out of the monitoring area according to the material information and the real-time coordinate data. If the second processor 30 determines that the electronic device 200 has moved out of the monitoring area, the second processor 30 outputs a reminder information to the first processor 10.

In one scenario, the communication network has malfunctioned, the first processor 10 is unable to obtain the real-time coordinate data of the electronic device 200 when the electronic device 200 is moved out of the monitoring area, and the first processor 10 may obtain the real-time coordinate data of the electronic device 200 when the electronic device 200 re-enters the monitoring area or enters another monitoring area. Therefore, the staff cannot know that the electronic device 200 has moved out of the monitoring area once through the monitoring device 100, which affects the deployment of the electronic device 200 by the staff. The second processor 30 may synchronize with the first processor 10 to determine whether the electronic device 200 has moved out of the monitoring area through the real-time coordinate data and the material information. When the first processor 10 is unable to obtain the real-time coordinate data and the second processor 30 is able to obtain the real-time coordinate data, and the second processor 30 determines that the electronic device 200 has moved out of the monitoring area, the second processor 30 may output a reminder information to the first processor 10. The first processor 10 determines that the electronic device 200 has moved out of the monitoring area according to the reminder information.

In the embodiment, a number of the monitoring areas may be one or more, which is not limited by the present disclosure. When the electronic device 200 is located in a monitoring area, the first processor 10 may obtain the material information corresponding to the monitoring area to determine whether the electronic device 200 is moved out of the monitoring area. When the electronic device 200 is moved out of the monitoring area and into another monitoring area, the first processor 10 may obtain the material information corresponding to another monitoring area, to determine whether the electronic device 200 has moved out of another monitoring area.

At step S35, generating record information.

when the first processor 10 determines that the electronic device 200 has moved out of the monitoring area, the first processor 10 may generate the record information and store the record information in the first storage device 20, to facilitate the staff to record the event that the electronic device 200 moves out of the monitoring area.

The present disclosure does not limit the content of the record information. For example, the content of the record information may include the time when the electronic device 200 moved out of the monitoring area, the name or the number of the monitoring area where the electronic device 200 moved out, the real-time coordinate data obtained when the first processor 10 determines that the electronic device 200 moved out of the monitoring area.

In the embodiment, when the first processor 10 determines that the electronic device 200 has moved out of the monitoring area according to the material information and the real-time coordinate data, or the first processor 10 receives the reminder information, the first processor 10 determines that the electronic device 200 has moved out of the monitoring area and generates the record information. When the first processor 10 has determined that the electronic device 200 has moved out of the monitoring area according to the material information and the real-time coordinate data, and has generated the record information. The first processor 10 may no longer respond to the reminder information when it receives the reminder information corresponding to the same event again, the first processor 10 may no longer repeatedly generates the record information corresponding to the same event.

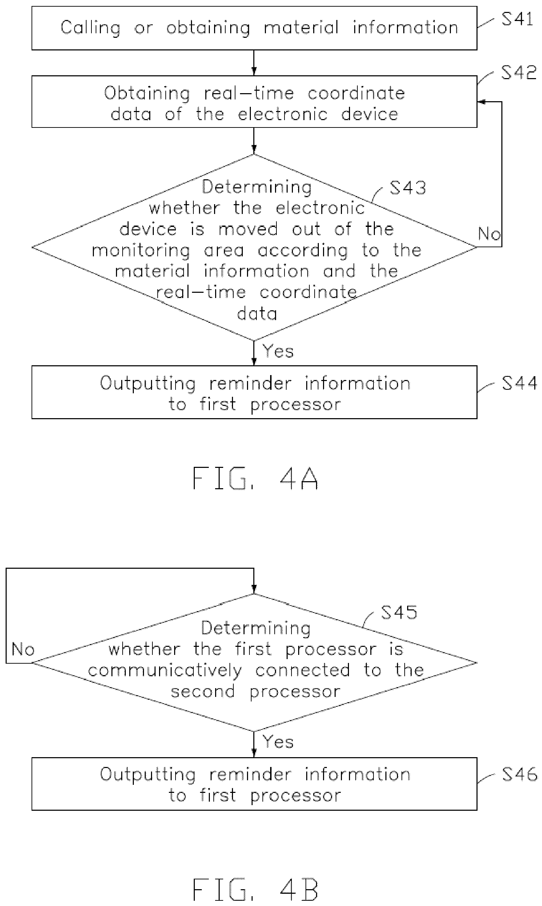

FIG. 4A is a flowchart of a monitoring method in accordance with an embodiment of the present disclosure. A route planning method shown in FIG. 4A can be applied to the second processor 30. In one embodiment, the monitoring method performed by the second processor 10 may include the following steps:

At step S41, calling or obtaining material information.

In one embodiment, the monitoring device 100 is a device with a human-computer interaction function, the staff may input the material information into the monitoring device 100 and store the material information in the first storage device 20. When the second processor 30 executes step S41, the second processor 30 may obtain the material information from the second storage device 20.

In another embodiment, the electronic device 200 is a device with a human-computer interaction function, the staff may input the material information into the electronic device 200 and store the material information in the second storage device 40. When the second processor 30 executes step S41, the second processor 30 may call the material information from the electronic device 200.

In another embodiment, before the monitoring method is executed, the staff can operate an external device and input the material information into the external device. The external device is communicatively connected to the electronic device 200. When the second processor 30 executes step S41, the second processor 30 obtains the material information from the external device.

The external device can be a device with human-computer interaction function, information processing function and wireless communication function, and the external device may be but not limited to a personal computer, a smart phone, a tablet computer, and a smart watch.

At step S42, obtaining real-time coordinate data of the electronic device 200.

The second processor 30 may obtain the real-time coordinate data of the electronic device 200 using the same method as the first processor 10, which will not be repeated herein.

At step S43, determining whether the electronic device 200 is moved out of the monitoring area according to the material information and the real-time coordinate data. If the electronic device 200 is moved out of the monitoring area, step S44 is implemented, otherwise returns to step S42.

At step S44, outputting reminder information to first processor 10.

When the second processor 30 determines that the electronic device 200 has moved out of the monitoring area, the second processor 30 may generate a reminder information and output the reminder information to the first processor 10, to assist the first processor 10 in determining whether or not the electronic device 200 has moved out of the monitoring area, so as to improve the monitoring accuracy of the first processor 10 on the electronic device 200..

The present disclosure does not limit the content of the reminder information. For example, the content of the reminder information may include the time when the electronic device 200 moved out of the monitoring area, the name or the number of the monitoring area where the electronic device 200 moved out, the real-time coordinate data obtained when the first processor 10 determines that the electronic device 200 moved out of the monitoring area.

As shown in FIG. 4B, in some embodiments, the method for outputting reminder information to the first processor 10 may include the following steps:

At step S45, determining whether the first processor 10 is communicatively connected to the second processor 30. If the first processor 10 is communicatively connected to the second processor 30, step S46 is implemented, otherwise returns to step S45.

The method for determining whether the first processor 10 is communicatively connected to the second processor 30 may be a method disclosed in the prior art, which is not limited in the present disclosure. For example, the second processor 30 may determine whether the first processor 10 is communicatively connected to the second processor 30 by querying whether there is an internet protocol address (IPA) of the monitoring device 100 in a list of connected devices. For example, the second processor 30 may send a test message to the first processor 10 and determine whether to receive a reply message from the first processor 10, so as to determine whether the first processor 10 is communicatively connected to the second processor 30.

At step S46, outputting reminder information to first processor 10.

In one scenario, the wireless communication connection between the first processor 10 and the second processor 30 is unable to connect for a short time due to poor communication network. The second processor 30 can first store the reminder information in the second storage device 40, and then re-determine whether the first processor 10 is communicatively connected to the second processor 30, until it is determined that the first processor 10 is communicatively connected to the second processor 30, the second processor 30 outputs the reminder information stored in the second storage device 40 to the first processor 10, so as to improve the monitoring accuracy of the monitoring device 100 on the electronic device 200.

As shown in FIG. 4, in some embodiments, when the first processor 10 executes step S33 and the second processor 30 executes step S43, the method of determining whether the electronic device 200 is moved out of the monitoring area may include the following steps:

At step S51, determining whether the first coordinate value of the real-time coordinate data is less than the first coordinate value of the first coordinate data in response to the monitoring area being a rectangular area. In response to the first coordinate value of the real-time coordinate data being less than the first coordinate value of the first coordinate data, the electronic device 200 is determined to move out of the monitoring area, step S35 or step S44 is implemented. In response to the first coordinate value of the real-time coordinate data being greater than or equal to the first coordinate value of the first coordinate data, step S52 is implemented.

After the first processor 10 obtains the material information, the first processor 10 may determine the shape of the monitoring area by identifying the area shape information of the material information, and identifies the point coordinate data to determine the first coordinate value and the second coordinate value of the first coordinate data and the second coordinate data. The point coordinate data includes the first coordinate data and the second coordinate data, and the first coordinate data and the second coordinate data respectively correspond to the coordinate data of two opposite vertices of the monitoring area in the coordinate system. In the embodiment, the first coordinate value of the first coordinate data is less than the first coordinate value of the second coordinate data, and the second coordinate value of the first coordinate data is greater than the second coordinate value of the second coordinate data.

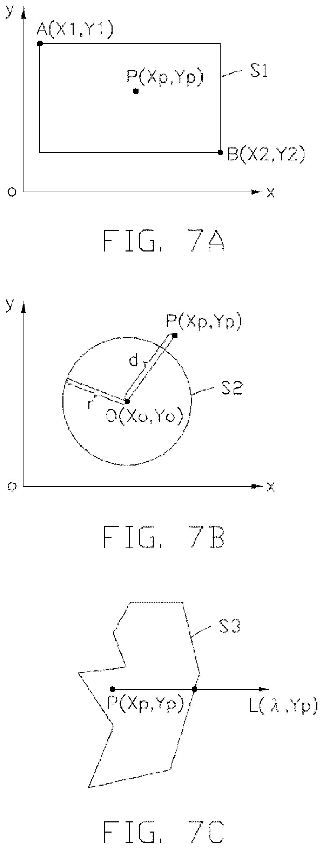

As shown in FIG. 7A, the real-time coordinate data may correspond to a real-time coordinate point P, the first coordinate data may correspond to a first coordinate point A, and the second coordinate data may correspond to a second coordinate point B. When the first coordinate value Xp of the real-time coordinate data is less than the first coordinate value X1 of the first coordinate data, in an extension direction of the X-axis of the coordinate system, the real-time coordinate point P is located on one side of the first coordinate point A away from the second coordinate point B, the real-time coordinate point P is determined to be outside the monitoring area S1, the electronic device 200 is located outside the monitoring area S1, and the electronic device 200 has moved out of the monitoring area.

At step S52, determining whether the first coordinate value of the real-time coordinate data is greater than the first coordinate value of the second coordinate data. In response to the first coordinate value of the real-time coordinate data being greater than the first coordinate value of the second coordinate data, the electronic device 200 is determined to move out of the monitoring area, and step S35 or step S44 is implemented. In response to the first coordinate value of the real-time coordinate data being less than the first coordinate value of the second coordinate data, step S53 is implemented.

As shown in FIG. 7A, when the first coordinate value Xp of the real-time coordinate data is greater than the first coordinate value X2 of the second coordinate data, in the extension direction of the X-axis of the coordinate system, the real-time coordinate point P is located on one side of the second coordinate point B away from the first coordinate point A, the real-time coordinate point P is determined to be outside the monitoring area S1, the electronic device 200 is located outside the monitoring area S1, and the electronic device 200 has moved out of the monitoring area.

At step S53, determining whether the second coordinate value of the real-time coordinate data is greater than the second coordinate value of the first coordinate data. In response to the second coordinate value of the real-time coordinate data being greater than the second coordinate value of the first coordinate data, the electronic device 200 is determined to move out of the monitoring area, and step S35 or step S44 is implemented. In response to the second coordinate value of the real-time coordinate data being less than or equal to the second coordinate value of the first coordinate data, step S54 is implemented.

As shown in FIG. 7A, when the second coordinate value Yp of the real-time coordinate data is greater than the second coordinate value Y1 of the first coordinate data, in an extension direction of the Y-axis of the coordinate system, the real-time coordinate point P is located on one side of the first coordinate point A away from the second coordinate point B, the real-time coordinate point P is determined to be outside the monitoring area S1, the electronic device 200 is located outside the monitoring area S1, and the electronic device 200 has moved out of the monitoring area.

At step S54, determining whether the second coordinate value of the real-time coordinate data is less than the second coordinate value of the second coordinate data. In response to the second coordinate value of the real-time coordinate data being less than the second coordinate value of the second coordinate data, the electronic device 200 is determined to move out of the monitoring area, and step S35 or step S44 is implemented. In response to the second coordinate value of the real-time coordinate data being greater than or equal to the second coordinate value of the second coordinate data, the electronic device 200 is determined not to move out of the monitoring area, and step S34 is implemented or step S42 is returned.

As shown in FIG. 7A, when the second coordinate value Yp of the real-time coordinate data is less than the second coordinate value Y2 of the second coordinate data, in an extension direction of the Y-axis of the coordinate system, the real-time coordinate point P is located on one side of the second coordinate point B away from the first coordinate point A, the real-time coordinate point P is determined to be outside the monitoring area S1, the electronic device 200 is located outside the monitoring area S1, and the electronic device 200 has moved out of the monitoring area.

When the first coordinate value Xp of the real-time coordinate data is greater than or equal to the first coordinate value X1 of the first coordinate data, and is less than or equal to the first coordinate value X2 of the second coordinate data, and the second coordinate value Yp of the real-time coordinate data is less than or equal to the second coordinate value Y1 of the first coordinate data, and is greater than or equal to the second coordinate value Y2 of the second coordinate data, and the real-time coordinate point P is determined to be located in the monitoring area S1.

When the first coordinate value of the real-time coordinate data is less than the first coordinate value of the first coordinate data or greater than the first coordinate value of the second coordinate data, or the second coordinate value of the real-time coordinate data is greater than the second coordinate value of the first coordinate data or less than the second coordinate value of the second coordinate data, and the electronic device 200 is determined to move out of the monitoring area.

If the above conditions are met, the embodiment of the present disclosure does not limit the execution order of steps S51 to S54.

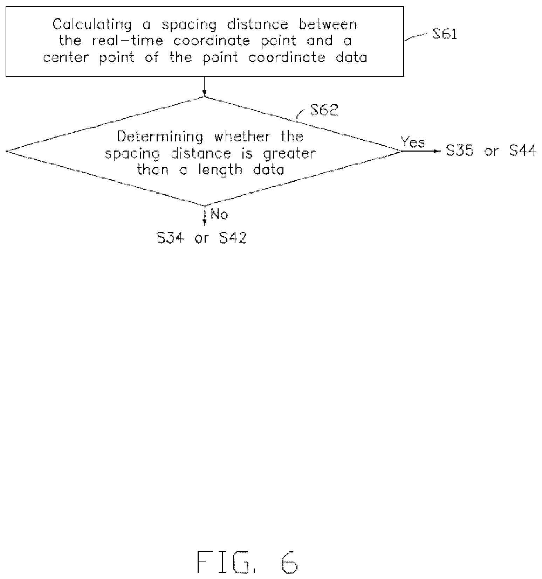

Referring to FIG. 6, in some embodiments, the method for determining whether the electronic device 200 is moved out of the monitoring area may include the following steps:

At step S61, calculating a spacing distance between the real-time coordinate point and a center point of the point coordinate data in response to the monitoring area being a circular area.

When the shape of the boundary of the monitoring area is a circular, the point coordinate data of the material information is the coordinate data corresponding to the center point. The first processor 10 may determine that the monitoring area is a circular area by identifying the area shape information of the material information and identify the point coordinate data to determine the first coordinate value and the second coordinate value of the center point of the monitoring area.

As shown in FIG. 7B, the real-time coordinate data corresponds to the real-time coordinate point P, and the point coordinate data corresponds to the center point O. The present disclosure may calculate the spacing distance d between the real-time coordinate point and the center point according to the first coordinate value Xp and the second coordinate value Yp of the real-time coordinate data, and the first coordinate value Xo and the second coordinate value Yo of the point coordinate data. The spacing distance d satisfies the following formula:

$$d = \sqrt{(Xp - Xo)^2 + (Yp - Yo)^2}$$

At step S62, determining whether the spacing distance is greater than a length data. In response to the spacing distance being greater than the length data, the electronic device 200 is determined to move out of the monitoring area, and step S35 or step S44 is implemented. In response to the spacing distance being less than or equal to the length data, the electronic device 200 is determined not to move out of the monitoring area, and step S34 is implemented or step S42 is returned.

As shown in FIG. 7B, when a monitoring area S2 is a circular area, a length data r in the material information is the radius of the monitoring area. When the spacing distance is greater than the length data r, the real-time coordinate point P is determined to outside the monitoring area S2, the electronic device 200 has moved out of the monitoring area.

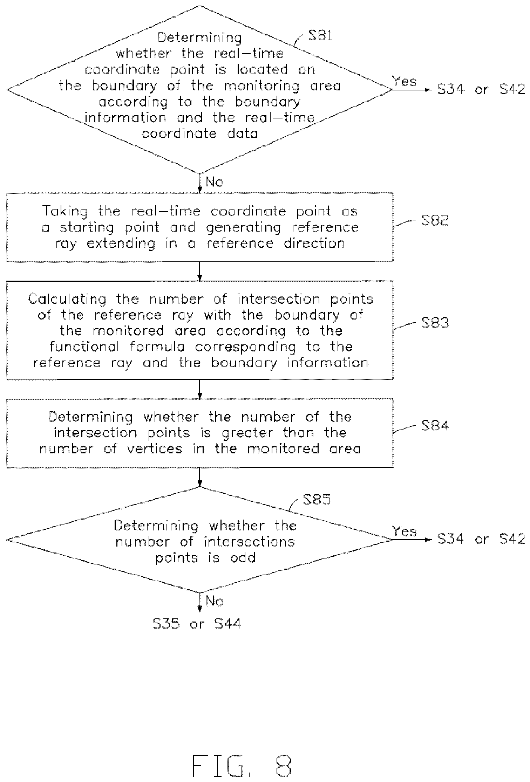

Referring to FIG. 8, in some embodiments, the method for determining whether the electronic device 200 is moved out of the monitoring area may include the following steps:

At step S81, determining whether the real-time coordinate point is located on the boundary of the monitoring area according to the boundary information and the real-time coordinate data in response to the monitoring area being a polygonal area. In response to the real-time coordinate point being located on the boundary of the monitoring area, the electronic device 200 is determined to have not moved out of the monitoring area, and step S34 is implemented or step S42 is returned. In response to the real-time coordinate point not being located on the boundary of the monitoring area, and step S82 is implemented.

In the present disclosure, when the shape of the boundary of the monitoring area is a polygon other than a rectangle, the content of the area shape information of the material information is a polygonal area.

When the shape of the boundary of the monitoring area is a polygon other than a rectangle, the point coordinate data of the material information is the coordinate data corresponding to multiple vertices of the monitoring area, and the content of the boundary information is multiple functional formulas corresponding to multiple boundaries of the monitoring area. The present disclosure may determine whether the real-time coordinate point is located on the boundary of the monitoring area by determining whether the real-time coordinate data conforms to at least one of the multiple functional formulas corresponding to multiple boundary information.

At step S82, taking the real-time coordinate point as a starting point and generating reference ray extending in a reference direction.

As shown in FIG. 7C, the reference direction may be the direction set by the staff before the monitoring method is executed. The reference direction may also be a direction randomly selected by the electronic device 200, the monitoring device 100 or an external device. The present disclosure does not limit the reference direction. For example, the reference direction may be a positive direction of the X-axis of the coordinate system.

The present disclosure can generate a functional formula corresponding to the reference ray while generating the reference ray according to the real-time coordinate data and the reference direction.

At step S83, calculating the number of intersection points of the reference ray with the boundary of the monitored area according to the functional formula corresponding to the reference ray and the boundary information.

The present disclosure compares the functional formula corresponding to the reference ray with multiple functional formulas corresponding to multiple boundaries one by one, determine the number of independent variables that exist in the functional formula corresponding to the reference ray and the functional formula corresponding to the boundary when the dependent variable is the same, thereby determining the number of intersection points of the reference ray with the boundary of the monitored area.

At step S84, determining whether the number of the intersection points is greater than the number of vertices in the monitored area. In response to the number of the intersection points being greater than the number of the vertices in the monitored area, and step S34 is implemented or step S42 is returned. In response to the number of the intersection points being less than or equal to the number of the vertices in the monitored area, step S85 is implemented.

As shown in FIG. 7C, when a reference ray L is generated according to the reference direction, no matter whether the real-time coordinate point P is located inside or outside the monitoring area S3, there is a possibility that the reference ray L coincides with a boundary of the monitoring area S3. When the reference ray L coincides with the boundary of the monitoring area S3, the calculation result of the number of the intersection points is infinite. At this time, the number of the intersection points has no reference significance for determining whether the electronic device 200 moves out of the monitoring area S3, therefore, the calculated number of the intersection points can be ignored, and the monitoring device 100 can proceed to step S34, to continue to determine whether the electronic device 200 moves out of the monitoring area according to whether the reminder information is received. The electronic device 200 reobtains the real-time coordinate data of the electronic device 200 to recalculate the number of the intersection points. Since the number of the intersection points is infinite when the reference ray coincides with a boundary of the monitoring area, the number of the intersection points is greater than any natural number. Since the number of the intersection points where a ray intersects the polygon boundary is not greater than the number of the vertices of the polygon, the present disclosure uses the number of the vertices that the first processor 10 and the second processor 30 can be obtained by identifying the reference information as a reference value for comparing with the number of the intersection points. In another embodiment, when step S84 is executed, other values may be used as a reference value compared with the number of the intersection points, to determine whether the reference ray coincides with the boundary of the monitoring area. For example, step S84 may be replaced by determining whether the number of the intersection points is greater than the number of sides of the polygon. For example, step S84 may be replaced by determining whether the number of the intersection points is greater than a preset threshold, and the preset threshold may be 50.

At step S85, determining whether the number of intersections points is odd. In response to the number of the intersection points being odd, the electronic device 200 is determined to be located in the monitoring area, and step S34 is implemented or step S42 is returned. In response to the number of the intersection points being even, the electronic device 200 is determined to has moved out of the monitoring area, and step S35 or step S44 is implemented.

Only if a point is located within a polygon, the intersection point between the ray starting from this point and the polygon boundary is odd. Therefore, the present disclosure may determine whether the electronic device 200 has moved out of the monitoring area by determining whether the number of the intersection points is odd or even.

It can be understood that 0 is a special even number. In the present disclosure, when the number of the intersection point is 0, the electronic device 200 is determined to be moved out of the monitoring area.

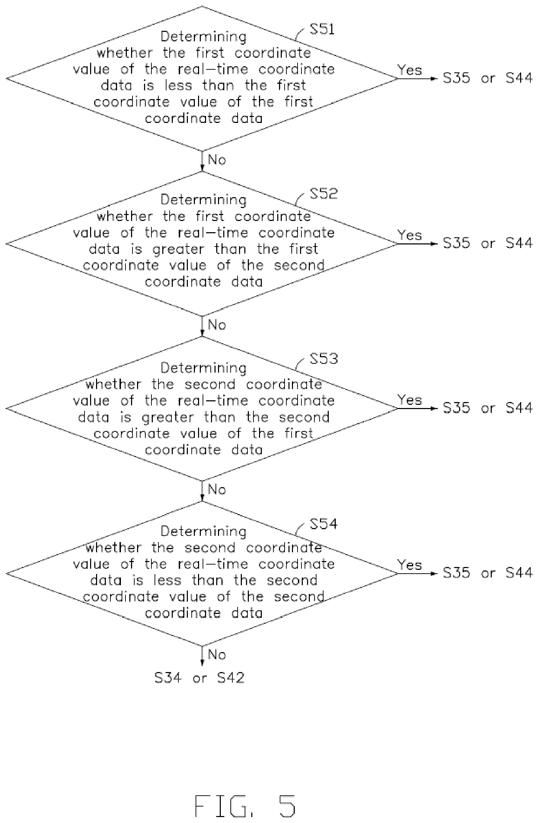

In the embodiment, when the first processor 10 executes the monitoring method shown in FIGS. 5, 6, and 8, if the electronic device 200 is determined to be located within the monitoring area, step S34 is implemented, if the electronic device 200 is determined to be moved out of the monitoring area, and step S35 is implemented. When the second processor 30 executes the monitoring method shown in FIG. 8, if the electronic device 200 is determined to be located within the monitoring area, returns to step S42, if the electronic device 200 is determined to be moved out of the monitoring area, and step S44 is implemented.

In the monitoring method provided by the present disclosure, the electronic device 200 and the monitoring device 100 simultaneously determine whether the electronic device 200 moves out of the monitoring area according to the material information and the real-time coordinate data, and the electronic device 200 outputs the reminder information to the monitoring device 100 when the electronic device 200 is determined to move out of the monitoring area, so that the monitoring device 100 can determine whether the electronic device 200 has moved out of the monitoring area according to the two elements of the reminder information and the obtained real-time coordinate data, thereby reducing the situation that the monitoring device 100 cannot monitor the electronic device 200 for a period of time due to poor communication network, improving the accuracy of the monitoring device 100 for monitoring the location of the electronic device 200, and improving the convenience for the staff to dispatch the electronic device 200.

The monitoring device 100 provided by the present disclosure executes the monitoring method shown in FIGS. 3, 5, 6, and 8. The monitoring device 100 executes the monitoring method, the monitoring device 100 determines whether the electronic device 200 has moved out of the monitoring area according to the two elements of the reminder information and the obtained real-time coordinate data, thereby reducing the situation that the monitoring device 100 cannot monitor the electronic device 200 for a period of time due to poor communication network, and improving the accuracy of the monitoring device 100 for monitoring the location of the electronic device 200.

The electronic device 200 provided by the present disclosure executes the monitoring method shown in FIGS. 4A to 6 and 8. The electronic device 200 executes the monitoring method, and the electronic device 200 determines whether the electronic device 200 has moved out of the monitoring area according to the two elements of the reminder information and the obtained real-time coordinate data, thereby reducing the situation that the monitoring device 100 cannot monitor the electronic device 200 for a period of time due to poor communication network, and improving the accuracy of the monitoring device 100 for monitoring the location of the electronic device 200.

Based on the same concept, the present disclosure further provides a storage medium, the storage medium includes a first program 21, when the first program 21 is running on the monitoring device 100, the monitoring device 100 executes the monitoring method provided by embodiments of the present disclosure.

Based on the same concept, the present disclosure further provides a storage medium, the storage medium includes a second program 41, when the second program 41 is running on the electronic device 200, the electronic device 200 executes the monitoring method provided by embodiments of the present disclosure.

The storage medium can be a USB flash disk, a removable hard disk, a read only memory (ROM), a magnetic disk, or an optical disk, and various computer readable storage medium that can store program code.

The above is only a specific embodiment of the present disclosure, but the scope of protection of the present disclosure is not limited thereto. Any skilled person familiar with the technical field can easily think of various equivalent modifications or replacements within the technical scope disclosed by the present disclosure, and these modifications or replacements should be covered by the scope of protection of the present disclosure. Therefore, the protection scope of the present disclosure shall be subject to the protection scope of the claims.

**Claims**

1. A monitoring method applied to a monitoring device for monitoring whether an electronic device is moved out of a monitoring area and comprising:

   calling or obtaining material information; wherein the material information comprises at least one of area shape information, point coordinate data, length data, and boundary information corresponding to the monitoring area;
   obtaining real-time coordinate data of the electronic device;
   determining whether the electronic device moved out of the monitoring area according to the material information and the real-time coordinate data;
   generating record information in response to the electronic device moving out of the monitoring area or receiving a reminder information output by the electronic device; wherein the electronic device outputs the reminder information when the electronic device is moved out of the monitoring area.

2. The monitoring method according to claim 1, wherein determining whether the electronic device moved out of the monitoring area, comprises:

   determining whether a first coordinate value of the real-time coordinate data is less than a first coordinate value of first coordinate data or greater than a first coordinate value of second coordinate data in response to the monitoring area being a rectangular area; wherein the point coordinate data comprises the first coordinate value and a second coordinate value of the first coordinate data and the first coordinate value and a second coordinate value of the second coordinate data, and the first coordinate value of the first coordinate data is less than the first coordinate value of the second coordinate data;
   determining whether a second coordinate value of the real-time coordinate data is greater than the second coordinate value of the first coordinate data or less than the second coordinate value of the second coordinate data in response to the first coordinate value of the real-time coordinate data being greater than the first coordinate value of the first coordinate data or being less than the first coordinate value of the second coordinate data; wherein the second coordinate value of the first coordinate data is greater than the second coordinate value of the second coordinate data; and
   determining that the electronic device is moved out of the monitoring area in response to the first coordinate value of the real-time coordinate data being less than the first coordinate value of the first coordinate data or being greater than the first coordinate value of the second coordinate data, or in response to the second coordinate value of the real-time coordinate data being greater than the second coordinate value of the first coordinate data or being less than the second coordinate value of the second coordinate data.

3. The monitoring method according to claim 1, wherein the real-time coordinate data corresponds to a real-time coordinate point, wherein determining whether the electronic device moved out of the monitoring area, comprises:

   calculating a spacing distance between the real-time coordinate point and a center point of the point coordinate data in response to the monitoring area being a circular area;
   determining whether the spacing distance is greater than the length data; wherein the length data is a radius of the monitoring area; and
   determining that the electronic device is moved out of the monitoring area in response to the spacing distance being greater than the length data.

4. The monitoring method according to claim 1, wherein the real-time coordinate data corresponds to a real-time coordinate point, wherein determining whether the electronic device moved out of the monitoring area, comprises:

   determining whether the real-time coordinate point is located on a boundary of the monitoring area according to the boundary information and the real-time coordinate data in response to the monitoring area being a polygonal area;
   taking the real-time coordinate point as a starting point and generating reference ray extending in a reference direction in response to the real-time coordinate point not being located on the boundary of the monitoring area;
   calculating a number of intersection points of the reference ray with the boundary of the monitored area;
   determining that the electronic device is moved out of the monitoring area in response to the number of the intersection points being an even number; and

determining that the electronic device is within the monitoring area in response to the real-time coordinate point being located on the boundary of the monitoring area, or in response to the number of the intersection points being an odd number.

5. The monitoring method according to claim 4, wherein determining whether the electronic device moved out of the monitoring area, comprises:
obtaining the real-time coordinate data in response to the number of the intersection points being greater than a number of the boundaries of the monitoring area.

6. A monitoring method applied to an electronic device for monitoring whether the electronic device is moved out of a monitoring area and comprising:

calling or obtaining material information; wherein the material information comprises at least one of area shape information, point coordinate data, length data, and boundary information corresponding to the monitoring area;
determining whether the electronic device moved out of the monitoring area according to the material information and a real-time coordinate data of the electronic device;
outputting reminder information to a monitoring device in response to the electronic device is moving out of the monitoring area.

7. The monitoring method according to claim 6, wherein outputting reminder information to a monitoring device, comprises:

determining whether the electronic device is communicatively connected to the monitoring device;
outputting the reminder information to the monitoring device in response to electronic device being communicatively connected to the monitoring device; and
storing the reminder information and determining whether the electronic device is communicatively connected to the monitoring device in response to electronic device not being communicatively connected to the monitoring device.

8. The monitoring method according to claim 6, wherein determining whether the electronic device moved out of the monitoring area, comprises:

determining whether a first coordinate value of the real-time coordinate data is less than a first coordinate value of first coordinate data or greater than a first coordinate value of second coordinate data in response to the monitoring area being a rectangular area; wherein the point coordinate data comprises the first coordinate value and a second coordinate value of the first coordinate data and the first coordinate value and a second coordinate value of the second coordinate data, and the first coordinate value of the first coordinate data is less than the first coordinate value of the second coordinate data;
determining whether a second coordinate value of the real-time coordinate data is greater than the second coordinate value of the first coordinate data or less than the second coordinate value of the second coordinate data in response to the first coordinate value of the real-time coordinate data being greater than the first coordinate value of the first coordinate data or being less than the first coordinate value of the second coordinate data; wherein the second coordinate value of the first coordinate data is greater than the second coordinate value of the second coordinate data; and
determining that the electronic device is moved out of the monitoring area in response to the first coordinate value of the real-time coordinate data being less than the first coordinate value of the first coordinate data or being greater than the first coordinate value of the second coordinate data, or in response to the second coordinate value of the real-time coordinate data being greater than the second coordinate value of the first coordinate data or being less than the second coordinate value of the second coordinate data.

9. The monitoring method according to claim 6, wherein the real-time coordinate data corresponds to a real-time coordinate point, wherein determining whether the electronic device moved out of the monitoring area, comprises:

calculating whether a spacing distance between the real-time coordinate point and a center point of the point coordinate data in response to the monitoring area being a circular area; wherein the length data is a radius of the monitoring area; and
determining that the electronic device is moved out of the monitoring area in response to the spacing distance being greater than the length data.

10. The monitoring method according to claim 6, wherein the real-time coordinate data corresponds to a real-time coordinate point, wherein determining whether the electronic device moved out of the monitoring area, comprises:

determining whether the real-time coordinate point is located on a boundary of the monitoring area according to the boundary information and the real-time coordinate data in response to the monitoring area being a polygonal area;

taking the real-time coordinate point as a starting point and generating reference ray extending in a reference direction in response to the real-time coordinate point not being located on the boundary of the monitoring area;

calculating a number of intersection points of the reference ray with the boundary of the monitored area;

determining that the electronic device is moved out of the monitoring area in response to the number of the intersection points being an even number; and

determining that the electronic device is within the monitoring area in response to the real-time coordinate point being located on the boundary of the monitoring area, or in response to the number of the intersection points being an odd number.

11. The monitoring method according to claim 10, wherein determining whether the electronic device moved out of the monitoring area, comprises:
obtaining the real-time coordinate data in response to the number of the intersection points being greater than a number of the boundaries of the monitoring area.

12. A monitoring device comprising:

a first storage device; and
a first processor;
wherein the first storage device stores a first program, and when the first processor executes the first program, the monitoring method in any one of claims 1-5 is implemented.

13. An electronic device comprising:

a second storage device; and
a second processor;
wherein the second storage device stores a second program, and when the second processor executes the second program, the monitoring method in any one of claims 6-11 is implemented.

FIG. 1

200

Electronic device

40

Second storage device

Second program

41

30

Second processor

FIG. 2

```
          ┌─────────────────────────────────────────┐
          │  Calling  or  obtaining  material information │──── S31
          └─────────────────────────────────────────┘
                             │
                             ▼
          ┌─────────────────────────────────────────┐
          │   Obtaining  real—time  coordinate       │──── S32
          │    data  of  the  electronic  device     │
          └─────────────────────────────────────────┘
                             │
                             ▼
                      ╱─────────────╲
              Yes   ╱  Determining    ╲  S33
           ◄───────  whether  the  electronic
                   ╱  device  is  moved  out  of  a  ╲
                  ╲ monitoring  area  according  to  the ╱
                   ╲ material  information  and  the  ╱
                    ╲  real—time  coordinate  ╱
                      ╲      data      ╱
                             │No
                             ▼
                      ╱─────────────╲
                    ╱  Determining    ╲  S34
                   ╱ whether  to  receive  a  reminder ╲      No
                  ╲  information  output  by  the      ╱──────►
                   ╲    electronic  device     ╱
                      ╲─────────────╱
                             │Yes
                             ▼
          ┌─────────────────────────────────────────┐
          │   Generating  record  information        │──── S35
          └─────────────────────────────────────────┘
```

FIG. 3

Calling or obtaining material information —— S41

Obtaining real-time coordinate data of the electronic device —— S42

Determining whether the electronic device is moved out of the monitoring area according to the material information and the real-time coordinate data —— S43

No

Yes

Outputting reminder information to first processor —— S44

FIG. 4A

Determining whether the first processor is communicatively connected to the second processor —— S45

No

Yes

Outputting reminder information to first processor —— S46

FIG. 4B

Determining
whether the first coordinate
value of the real-time coordinate
data is less than the first
coordinate value of the first
coordinate data — S51

Yes → S35 or S44

No

Determining
whether the first coordinate
value of the real-time coordinate
data is greater than the first
coordinate value of the second
coordinate data — S52

Yes → S35 or S44

No

Determining
whether the second coordinate
value of the real-time coordinate
data is greater than the second
coordinate value of the first
coordinate data — S53

Yes → S35 or S44

No

Determining
whether the second coordinate
value of the real-time coordinate
data is less than the second
coordinate value of the second
coordinate data — S54

Yes → S35 or S44

No

S34 or S42

FIG. 5

Calculating a spacing distance between the real-time coordinate point and a center point of the point coordinate data — S61

Determining whether the spacing distance is greater than a length data — S62

Yes → S35 or S44

No
S34 or S42

FIG. 6

FIG. 7A

FIG. 7B

FIG. 7C

Determining whether the real-time coordinate point is located on the boundary of the monitoring area according to the boundary information and the real-time coordinate data — S81

Yes → S34 or S42

No

Taking the real-time coordinate point as a starting point and generating reference ray extending in a reference direction — S82

Calculating the number of intersection points of the reference ray with the boundary of the monitored area according to the functional formula corresponding to the reference ray and the boundary information — S83

Determining whether the number of the intersection points is greater than the number of vertices in the monitored area — S84

Determining whether the number of intersections points is odd — S85

Yes → S34 or S42

No

S35 or S44

FIG. 8